(19) Europäisches Patentamt
European Patent Office
Office européen des brevets

(11) **EP 4 787 520 A2**

(12) **EUROPEAN PATENT APPLICATION**

(43) Date of publication:
05.08.2026 Bulletin 2026/32

(51) International Patent Classification (IPC):
**H01M 10/052** (2010.01)

(21) Application number: 26186705.5

(22) Date of filing: 25.05.2022

(52) Cooperative Patent Classification (CPC):
**H01M 4/02; H01M 4/131; H01M 4/133;
H01M 4/134; H01M 4/364; H01M 4/366;
H01M 4/386; H01M 4/5835; H01M 4/625;
H01M 10/052;** H01M 2004/021; H01M 2004/027;
Y02E 60/10

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 12.08.2021 CN 202110924294

(62) Document number(s) of the earlier application(s) in
accordance with Art. 76 EPC:
**22855033.1 / 4 187 642**

(71) Applicants:
• **BTR New Material Group Co., Ltd.
Shenzhen, Guangdong 518106 (CN)**
• **Dingyuan New Energy Technology Co., Ltd.
Huizhou, Guangdong 516227 (CN)**

(72) Inventors:
• **HE, Peng
Shenzhen, 518106 (CN)**
• **XIAO, Chengmao
Shenzhen, 518106 (CN)**
• **GUO, Eming
Shenzhen, 518106 (CN)**
• **REN, Jianguo
Shenzhen, 518106 (CN)**
• **HE, Xueqin
Shenzhen, 518106 (CN)**

(74) Representative: **Noréns Patentbyrå AB
Box 10198
100 55 Stockholm (SE)**

Remarks:
This application was filed on 22-06-2026 as a divisional application to the application mentioned under INID code 62.

(54) **ANODE MATERIAL AND PREPARATION METHOD THEREOF, LITHIUM ION BATTERY**

(57) Providing an anode material and a preparation method thereof, lithium ion battery. The anode material includes an aggregate, the aggregate comprises an active material, a carbon material, and a dopant element, wherein the dopant element is capable of inducing the carbon material to produce a Lewis acid site, and at least a portion of the active material is bound to the carbon material through the Lewis acid site, and wherein the anode material has a specific surface area of $\leq 10$ m$^2$/g. The anode material of the present application may significantly enhance the initial efficiency of composite material, and cycle performance and stability are also greatly improved.

mixing an active material, a dopant, a first carbon source and a solvent to prepare a precursor — S100

undergoing the precursor a primary heat treatment at 800°C to 980°C to obtain an aggregate — S200

undergoing the aggregate a carbon coating process to obtain the anode material — S300

FIG. 1

EP 4 787 520 A2

## Description

TECHNICAL FIELD

The present application relates to the field of anode material, and in particular, to anode material and preparation method thereof, lithium ion battery.

BACKGROUND

In recent years, lithium ion battery is widely used in electric vehicles and consumer electronics products due to the advantages of high energy density, high output power, long cycle life, and little environmental pollution. For example, silicon carbon anode material have been partially applied in the field of power battery, but the anode initial efficiency is required to be high in full cell applications. The initial efficiency of the current graphite anode is generally 93% or more, and the initial efficiency of the silicon anode material is usually 80% to 85%, which result a poor performance of anode capacity per gram in the design of finished battery. There is a need of manners to improve the initial efficiency, such as a technique of anode pre-lithiation, etc. But the existing lithium supplementation means are complex, hazardous, and require high demand for the device, and requiring other methods for improving the initial efficiency of the silicon-based material, thus limiting further application of the silicon anode.

Therefore, how to increase the initial efficiency while simplifying the process and reducing costs is a problem to be solved at present.

SUMMARY

The present application, in order to overcome the deficiencies described above, provides an anode material and a preparation method thereof, a lithium ion battery, facilitating increasing the initial efficiency of the anode material, and the preparation method may simplify the process and reduce preparation costs.

In a first aspect, an embodiment of the present application provide an anode material including an aggregate, the aggregate includes an active material, a carbon material, and a dopant element; where the carbon material is shown in a Raman spectrum obtained by Raman spectroscopy using a measurement light source having a wavelength of 532 nm that a G band is observed at 1530 $cm^{-1}$ to 1630 $cm^{-1}$, and a D band is observed at 1280 $cm^{-1}$ to 1380 $cm^{-1}$, and a ratio $I_D/I_G$ of between peak intensity $I_D$ of the D band and peak intensity $I_G$ of the G band is 1 to 2.5, and where the anode material has a specific surface area of $\leq 10$ $m^2/g$.

In a second aspect, an embodiment of the present application provide an anode material including an aggregate, and the aggregate includes an active material, a carbon material, and a dopant element, where the dopant element is capable of inducing the carbon material to produce a Lewis acid site, and at least a portion of the active material is bound to the carbon material though the Lewis acid site, and where the anode material has a specific surface area of $\leq 10$ $m^2/g$.

In a feasible embodiment, the dopant element includes at least one of fluorine, nitrogen, and phosphorous.

In a feasible embodiment, at least one of the active material and the carbon material contains the dopant element.

In a feasible embodiment, the dopant element is distributed on at least one of surface and inside of the active material.

In a feasible embodiment, the dopant element is distributed on at least one of surface and inside of the carbon material.

In a feasible embodiment, a content of the dopant element in the aggregate is 50 ppm to 20,000 ppm.

In a feasible embodiment, pores are formed among the carbon materials, and at least a portion of the active material is filled in the pores.

In a feasible embodiment, the carbon material has a pore volume of $\geq 0.35$ $cm^3/g$.

In a feasible embodiment, the active material is distributed among the carbon materials or on surface of the carbon material.

In a feasible embodiment, the active material includes an active particle.

In a feasible embodiment, the active material includes at least one of Li, Na, K, Sn, Ge, Si, Fe, Mg, Ti, Zn, Al, P, Cu, and $SiO_x$, where $0<x\leq2$.

In a feasible embodiment, the active material has a median particle diameter of 1 nm to 300 nm.

In a feasible embodiment, the carbon material includes at least one of crystalline carbon, noncrystalline carbon, artificial graphite, natural graphite, soft carbon, hard carbon, amorphous carbon, carbon nanotube, carbon fiber, and graphene.

In a feasible embodiment, a mass ratio of the active material to the carbon material is (90 to 10):(10 to 90).

In a feasible embodiment, the aggregate further includes a metal oxide.

In a feasible embodiment, at least a portion of the metal oxide is filled in the pores among the carbon materials.

In a feasible embodiment, the metal oxide has a chemical formula of $M_xO_y$, $0.2 \leq y/x \leq 3$, where M includes at least one of Sn, Ge, Si, Fe, Cu, Ti, Na, Mg, Al, Ca, and Zn.

In a feasible embodiment, the metal oxide includes any one of $GeO_2$, $SnO_2$, ZnO, $TiO_2$, $Fe_3O_4$, MgO, $SiO_2$, and CuO.

In a feasible embodiment, a mass ratio of the active material to the metal oxide is (30 to 100):(0.5 to 10).

In a feasible embodiment, the metal oxide is in a form of at least one of sheet and strip shape.

In a feasible embodiment, the metal oxide has an aspect ratio greater than 2.

In a feasible embodiment, a shortest distance among the metal oxides is $\geq$100 nm.

In a feasible embodiment, the aggregate further includes a conductive enhancer.

In a feasible embodiment, at least a portion of the conductive enhancer is filled in the pores among the carbon materials.

In a feasible embodiment, the conductive enhancer includes at least one of an alloy material and a conductive carbon.

In a feasible embodiment, the conductive enhancer includes at least one of an alloy material and a conductive carbon, where the conductive carbon includes at least one of carbon nanotube, carbon fiber, and graphite fiber.

In a feasible embodiment, the conductive enhancer has a conductivity of $10^0$ S/m to $10^8$ S/m.

In a feasible embodiment, the conductive enhancer is in a form of at least one of sheet and strip shape.

In a feasible embodiment, a mass ratio of the conductive enhancer to the active material is (0.01 to 15):(50 to 100).

In a feasible embodiment, the conductive enhancer has an aspect ratio of 2 to 5,000.

In a feasible embodiment, the anode material further includes a carbon layer coated on at least a portion of the surface of the aggregate.

In a feasible embodiment, a material of the carbon layer includes amorphous carbon. In a feasible embodiment, the carbon layer has a thickness of 10 nm to 5,000 nm.

In a feasible embodiment, a mass ratio of the aggregate to the carbon layer is (90 to 10):(10 to 90).

In a feasible embodiment, the anode material further includes an oxide layer formed on at least a portion of the surface of the active material.

In a feasible embodiment, the oxide layer has a thickness of 1 nm to 100 nm.

In a feasible embodiment, the oxide layer has pores.

In a feasible embodiment, the anode material has a median particle diameter of 0.5 $\mu$m to 30 $\mu$m.

In a feasible embodiment, the anode material has a specific surface area of $\leq$10 $m^2$/g.

In a feasible embodiment, the aggregate has a porosity of $\leq$10%.

In a feasible embodiment, the aggregate has a pressure-resistant hardness of $\geq$100 MPa.

In a feasible embodiment, density of the aggregate satisfies the following relationship: $(\rho2-\rho1)/\rho2 \leq 5\%$, where $\rho1$ is test density of the aggregate, $\rho2$ is theoretical density of the aggregate, and $\rho2$ is a sum of mass percentage of each component in the aggregate * theoretical density of each component.

In a third aspect, the present application provides a preparation method of anode material including the following:

mixing an active material, a dopant, a first carbon source, and a solvent to prepare a precursor; and

undergoing the precursor a primary heat treatment at 800°C to 980°C to obtain an aggregate.

In a feasible embodiment, the active material includes at least one of Li, Na, K, Sn, Ge, Si, Fe, Mg, Ti, Zn, Al, P, Cu, and $SiO_x$, where $0<x\leq2$.

In a feasible embodiment, the dopant includes at least one of a fluorine source, a phosphorus source, and a nitrogen source.

In a feasible embodiment, the dopant includes at least one of a fluorine source, a phosphorus source, and a nitrogen source, where the fluorine source includes a fluoride, and the fluoride includes at least one of hydrogen fluoride, lithium fluoride, ammonium fluoride, potassium fluoride, aluminum fluoride, magnesium fluoride, sodium fluoride, calcium fluoride, tetrabutyl ammonium fluoride, triethyl methoxymethyl ammonium fluoride, ammonium fluoroborate, and tetrabutyl ammonium fluoroborate.

In a feasible embodiment, the dopant includes at least one of a fluorine source, a phosphorus source, and a nitrogen source, where the phosphorus source includes at least one of triphenyl phosphine, tetraphenyl phosphonium bromide, 1-butyl-3-methylimidazolium sodium hexafluorophosphate, phosphine, sodium phosphate, sodium phosphite, elemental phosphorus, sodium hydrogen phosphate, sodium dihydrogen phosphate, sodium hydrogen phosphite, and phosphoric acid.

In a feasible embodiment, the dopant includes at least one of a fluorine source, a phosphorus source, and a nitrogen source, where the nitrogen source includes at least one of ammonia, ammonium chloride, ammonium carbonate, ammonium bicarbonate, urea, thiourea, lithium nitride, melamine, and hydrazine hydrate.

In a feasible embodiment, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In a feasible embodiment, a mass ratio of the active material, the dopant, and the first carbon source is (30 to 120):(0.9 to 20):(10 to 50).

In a feasible embodiment, the solvent includes organic solvent.

In a feasible embodiment, the solvent includes organic solvent, where the organic solvent includes at least one of ethanol, ethylene glycol, propanol, butanol, and n-pentanol.

In a feasible embodiment, the process of mixing an active material, a dopant, a first carbon source, and a solvent is specifically: dispersing the active material in the solvent and adding the dopant and the first carbon source.

In a feasible embodiment, an additive is also added in the process of mixing an active material, a dopant, a first carbon source, and a solvent.

In a feasible embodiment, the additive includes at least one of a surfactant and a coupling agent.

In a feasible embodiment, the additive includes a surfactant, where the surfactant includes at least one of n-octadecanoic acid, lauric acid, polyacrylic acid, sodium dodecyl benzene sulfonate, n-eicosanoic acid, palmitic acid, tetradecanoic acid, undecanoic acid, cetyl trimethyl ammonium bromide, and polyvinyl pyrrolidone.

In a feasible embodiment, the additive includes a coupling agent, where the coupling agent includes silane coupling agent, and the silane coupling includes at least one of γ-aminopropyl triethoxy silane, γ-glycidoxypropyl trimethoxy silane, and γ-methacryloxypropyl trimethoxy silane.

In a feasible embodiment, a mass ratio of the additive to the active material is (0.01 to 5):(50 to 100).

In a feasible embodiment, at least one of a metal oxide and a conductive enhancer is also added in the process of mixing an active material, a dopant, a first carbon source, and a solvent.

In a feasible embodiment, the metal oxide has a chemical formula of $M_xO_y$, $0.2 \leq y/x \leq 3$, where M includes at least one of Sn, Ge, Si, Fe, Cu, Ti, Na, Mg, Al, Ca, and Zn.

In a feasible embodiment, the metal oxide is in a form of at least one of sheet and strip shape.

In a feasible embodiment, the metal oxide has an aspect ratio greater than 2.

In a feasible embodiment, a mass ratio of the metal oxide to the active material is (0.5 to 10):(30 to 100).

In a feasible embodiment, a mass ratio of the conductive enhancer to the active material is (0.01 to 15):(50 to 100).

In a feasible embodiment, the conductive enhancer has a conductivity of $10^0$ S/m to $10^8$ S/m.

In a feasible embodiment, the conductive enhancer is in a form of at least one of sheet and strip shape.

In a feasible embodiment, the conductive enhancer has an aspect ratio of 2 to 5000.

In a feasible embodiment, the conductive enhancer includes at least one of an alloy material and a conductive carbon.

In a feasible embodiment, the process of preparing the precursor further includes performing at least one of dispersion treatment and drying treatment after mixing the active material, the dopant, the first carbon source, and the solvent.

In a feasible embodiment, the dispersion treatment includes at least one of mechanical stirring, ultrasonic dispersion, and grinding dispersion.

In a feasible embodiment, a temperature of the drying treatment is 30°C to 400°C

In a feasible embodiment, a time of the drying treatment is 1 h to 15 h.

In a feasible embodiment, before undergoing the precursor a primary heat treatment, the preparation method further includes undergoing the precursor a densification treatment, such that the aggregate has a porosity of ≤10% and a pressure-resistant hardness of ≥100 MPa.

In a feasible embodiment, the densification treatment includes at least one of a fusion process, a blending process, a moulding process, an isostatic pressing process, and an impregnation process.

In a feasible embodiment, the densification treatment includes at least one of a fusion process, a blending process, moulding process, an isostatic pressing process, and an impregnation process, where the fusion process is mechanical fusion.

In a feasible embodiment, the densification treatment includes at least one of a fusion process, a blending process, moulding process, an isostatic pressing process, and an impregnation process, where the fusion process is mechanical fusion, and a rotating speed of fusion machine used for the mechanical fusion is 500 r/min to 3000 r/min.

In a feasible embodiment, the densification treatment includes at least one of a fusion process, a blending process, moulding process, an isostatic pressing process, and an impregnation process, where the fusion process is mechanical fusion, and a blade gap width of the fusion machine used for the mechanical fusion is 0.01 cm to 0.5 cm.

In a feasible embodiment, the densification treatment includes at least one of a fusion process, a blending process, moulding process, an isostatic pressing process, and an impregnation process, where the fusion process is mechanical fusion, and a time of the mechanical fusion is at least 0.5 h.

In a feasible embodiment, a time of the primary heat treatment is 1 h to 5 h.

In a feasible embodiment, the primary heat treatment is performed in a first protective atmosphere.

In a feasible embodiment, the primary heat treatment is performed in a first protective atmosphere, where the gas of the first protective atmosphere includes at least one of nitrogen, helium, neon, argon, and krypton.

In a feasible embodiment, the preparation method further includes undergoing the aggregate a carbon coating process.

In a feasible embodiment, the carbon coating process includes mixing the aggregate with a second carbon source for secondary heat treatment.

In a feasible embodiment, the carbon coating process includes mixing the aggregate with a second carbon source for secondary heat treatment, where the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In a feasible embodiment, the carbon coating process includes mixing the aggregate with a second carbon source for a secondary heat treatment, where a mass ratio of the aggregate to the second carbon source is (20 to 100):(10 to 80).

In a feasible embodiment, the carbon coating process includes mixing the aggregate with a second carbon source for a secondary heat treatment, where a temperature of the secondary heat treatment is 800°C to 900°C.

In a feasible embodiment, the carbon coating process includes mixing the aggregate with a second carbon source for a secondary heat treatment, where a time of the secondary heat treatment is 1 h to 5 h.

In a feasible embodiment, the carbon coating process includes mixing the aggregate with a second carbon source for a secondary heat treatment, where the secondary heat treatment is performed in a second protective atmosphere.

In a feasible embodiment, the carbon coating process includes: mixing the aggregate with a second carbon source for a secondary heat treatment, where the secondary heat treatment is performed in a second protective atmosphere, and the gas of the second protective atmosphere includes at least one of nitrogen, helium, neon, argon, and krypton.

In a feasible embodiment, the carbon coating process includes mixing the aggregate with a second carbon source for secondary heat treatment, where after the secondary heat treatment, at least one of crushing, sieving, and demagnetizing is further performed.

In a feasible embodiment, the carbon coating process includes mixing the aggregate with a second carbon source for secondary heat treatment, where after the secondary heat treatment, at least one of crushing, sieving, and demagnetizing are further preformed, and the size of the sieving being ≥500 mesh.

In a fourth aspect, the present application provides a lithium ion battery including an anode material according to the first aspect or the second aspect, or an anode material prepared by the preparation method according to the third aspect.

The technical solutions of the present application have at least the following beneficial effects: the addition of the dopant element may promote bonding of the carbon material to the active material, and furthermore the degree of graphitization of the carbon material may be increased, thereby improving conductivity. The induction of the dopant element in the carbon material generates an active site with high activity and selectivity. The active site in one aspect is more easily combined with surface of the active material to form more firm connection; on the other hand, as the activity increasing, the energy barrier decreases, the rearrangement resistance of the carbon atoms decreases, the ordered arrangement is more easily formed during the high temperature heat treatment, it appears that order in local short range increase, and the degree of graphitization is partly increased.

The preparation method provided by the present application is simple in operation, can be applied to large-scale the production. The prepared anode material can effectively improve the stability of the lithium ion battery discharge and discharge cycles, and effectively reduce the rate of expansion of the anode material.

BRIEF DESCRIPTION OF DRAWINGS

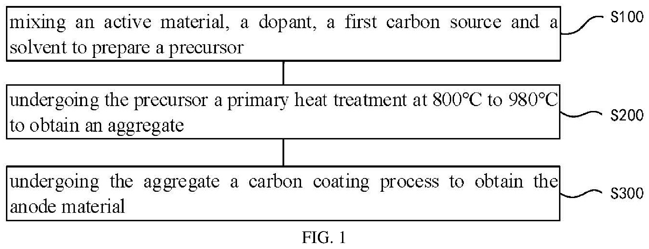

FIG. 1 is a flowchart of preparation method of anode material according to an embodiment.

DESCRIPTION OF EMBODIMENT

For a better understanding of the technical solutions of the present application, reference is made below to the accompanying drawings, which form a part hereof.

It should be clear that the described embodiments are only some, but not all, of the embodiments of the present application. Based on the embodiments herein, one of ordinary skill in the art, having no creative effort, falls within the scope of the disclosure.

The terminology used in the embodiments of the present application is for the purpose of describing particular embodiments only and is not intended to be limiting of the disclosure. As used in this application and the appended claims, the singular forms "a," "an," and "the" are intended to include the plural forms as well, unless the context clearly indicates otherwise.

It will be understood that the term "and/or" as used herein is merely an associative relationship that describes associated objects, that there may be three relationships, e. g. , A and/or B, which may mean that A alone is present, while both A and B are present, B alone is present, three of which exist alone. Additionally, the character "/" herein generally means that the contextual object is a "or" relationship.

An anode material of an embodiment, including aggregates, the aggregates include an active material, a carbon material, and a dopant element, where the carbon material is shown in a Raman spectrum obtained by Raman spectroscopy using a measurement light source having a wavelength of 532 nm that G band is observed at 1530 $cm^{-1}$ to 1630 $cm^{-1}$, and a D band is observed at 1280 $cm^{-1}$ to 1380 $cm^{-1}$, and a ratio $I_D/I_G$ of between peak intensity $I_D$ of the D band and peak intensity $I_G$ of the G band is 1 to 2.5.

The induction of the dopant element of the present embodiment in the carbon material generates an active site with high activity and selectivity. The active site in one aspect is more easily combined with surface of the active material to form more firm connection; on the other hand, as the activity increasing, the energy barrier decreases, the rearrangement resistance of the carbon atoms decreases, the ordered arrangement is more easily formed during the high temperature heat treatment, it appears that order in local short range increase, and the degree of graphitization is partly increased, thereby improving the conductivity of the carbon material.

Specifically, $I_D/I_G$ is 1, 1.2, 1.5, 1.7, 1.8, 2, 2.1, 2.2, or 2.5, or other values within the above ranges, which are not limited herein. $I_D/I_G$ is 1.7 to 2.3, the carbon material with graphitization degree within this range has good electronic conductivity.

An anode material of an embodiment, including an aggregate, the aggregate includes an active material, a carbon material, and a dopant element, where the dopant element is capable of inducing the carbon material to produce a Lewis acid site, and at least a portion of the active material is bound to the carbon material though the Lewis acid site.

The addition of the dopant element may promote bonding of the carbon material to the active material, and furthermore the degree of graphitization of the carbon material may be increased, thereby improving conductivity. The difference in electronegativity between the dopant element and the carbon atom is great. Thus the introduction of the dopant element causes the charge distribution of the carbon atom to be non-uniform, to generate a Lewis acid site. The induction of the dopant element in the carbon material generates an active site with high activity and selectivity. The active site on one hand is more easily combined with surface of the active material to form more firm connection. Based on this principle, the closer the dopant element is to the surface of the carbon material or active material, the easier it is to induce the carbon material to produce a Lewis acid site.

It is noted that the dopant element is present in the aggregate in an atomic form, and the dopant element in atomic form can be observed with a transmission electron microscope and a high angle annular dark-field scanning transmission electron microscope.

In some embodiments, the dopant element includes at least one of fluorine, nitrogen, and phosphorus; it is understood that the dopant element may be fluorine, nitrogen, or phosphorus; may also be a combination of fluorine and nitrogen, or a combination of fluorine and phosphorus, or a combination of nitrogen and phosphorus; and may also include fluorine, nitrogen, and phosphorus at the same time.

In some embodiments, a content of the dopant element in the aggregate is from 50 ppm to 20,000 ppm. The content of the dopant element may be specifically 50 ppm, 100 ppm, 500 ppm, 1000 ppm, 2000 ppm, 4000 ppm, 5000 ppm, 10000 ppm, 20000 ppm, etc.; or other values within the above ranges, which are not limited herein. Within this range, it can effectively improve the degree of graphitization of the carbon material, which facilitates to improving the stability of the interface of the active material, thereby increasing the cycling stability of the material; the initial efficiency, the expansion rate, and the cycle life of the anode material are improved. The content of the dopant element can be obtained by a test method such as ion chromatography, compositional analysis, or spectrum analysis (EDX analysis). Herein, among them, the EDX analysis is carried out by a method including: a sample of anode material is embed and fixed by using a cold mounting resin, then grade-ground and polished finely, to obtain a particle cross-section, which is cleaned and dried, and carbon coated; the processed sample is placed in a scanning electron microscope (SEM), and an aggregate area of which is selected by using a matching EDS spectrometer, and tested for surface scanning under set appropriate electrical parameters, to obtain the content of the dopant element in the aggregates.

In some embodiments, at least one of the active material and the carbon material contains the dopant element.

In some embodiments, the dopant element is distributed on the surface and/or interior of the active material. When the dopant element is distributed inside the active material, a part of the dopant element replaces the atoms in crystal structure of the material and forms a valence bond with the adjacent atoms, and a part of the dopant element is distributed in lattice defect of the crystal structure. Such as the Si material, the fluorine element replaces the silicon atom in the silicon crystal structure and forms a fluoro-silicon bond with the adjacent silicon atoms, and it may also be distributed in the lattice defects of the crystal structure of the silicon based material.

In other embodiments, the dopant element is distributed on the surface and/or inside of the carbon material. When the dopant element is distributed inside the carbon material, a part of the dopant element replaces the atoms in crystal structure of the carbon material and forms a valence bond with the adjacent carbon atom, and a part of the dopant element is distributed in lattice defect of the carbon crystal structure.

Of course, in some embodiments, the dopant element is distributed on both of the surface and/or inside of the active material, and the surface and/or inside of the carbon material.

It is noted that since the dopant content of the dopant element is very low, which is not enough to form a long-range ordered structure, it does not cause a large change in the crystal structure of the material itself, thereby enabling better retention of the structural stability of the material.

In some embodiments, in the aggregate, the active material is distributed among the carbon materials or the surface of the carbon material, preferably, the active material is uniformly dispersed in the carbon material.

In some embodiments, pores are formed among the carbon materials, and at least a portion of the active material is filled in the pores. Such filling method is effective to utilize pores formed among the carbon materials, so that the active material dispersed in the pores has a certain deformation space when its volume changes during charging and discharging, reducing the disruption of stress due to volume changing.

In some embodiments, the carbon material has a pore volume of $\geq 0.35$ cm$^3$/g. Where the pore volume of the carbon material includes the pore volume of pores structure formed among the carbon materials and the pore volume of the porous carbon material (porous structure of the carbon material itself). With a pore volume of no less than 0.35 cm$^3$/g, on the one hand, the internal pores can well contain the active material and reserve space for the expansion of the active material; on the other hand, a suitable pore volume can provide more channels for the penetrating of surface-coated carbon during subsequent carbon coating processes, facilitating the coating of carbon. The pore volume of the carbon material is tested by a gas adsorption BET method.

In some embodiments, the active material includes an active particle.

In some embodiments, the active material refers to a substance that can react with lithium to de-intercalate lithium. Specifically, the active material includes at least one of Li, Na, K, Sn, Ge, Si, Fe, SiO$_x$ ($0<x\leq2$), Mg, Ti, Zn, Al, P, and Cu; the active material may be an elemental metal. In some embodiments, the active material may be specifically a Si particle, a Sn particle, a Ge particle, an Al particle. In other embodiments, the active material may also be a silicon lithium alloy, a silicon magnesium alloy, and so on. Of course, it is noted that in some cases, the active material includes an elemental particle and an alloy.

In some embodiments, the active material has a median particle diameter of 1 nm to 300 nm. Specifically, it may be 1 nm, 5 nm, 10 nm, 50 nm, 75 nm, 100 nm, 150 nm, 200 nm, 250 nm, 300 nm and so on, which are not limited herein.

In some embodiments, the carbon material includes at least one of crystalline carbon, noncrystalline carbon, artificial graphite, natural graphite, soft carbon, hard carbon, amorphous carbon, carbon nanotubes, carbon fiber, and graphene.

In some embodiments, a mass ratio of the active material to the carbon material is (90 to 10): (10 to 90). Specifically, it may be 90:10, 80:20, 70:30, 60:40, 50:50, 40:60, 30:70, 20:80, 10:90, and so on, which are not limited herein.

In some embodiments, the aggregate has a porosity of $\leq10\%$ and a pressure-resistant hardness of $\geq100$ MPa.

At this point, the aggregate has a low porosity, i.e., its solidity is high, on one hand, it facilitates to increase the energy density of the composite material, on the other hand, even if the surface of the material with high solidity is destroyed, the electrolyte does not readily penetrate into the interior of the aggregate, which facilitates protecting the active material particles inside, reducing the probability of contact of the electrolyte with the active material, thereby facilitating the formation of a stable solid electrolyte film. In addition, the high solidity aggregate has a higher pressure-resistant hardness, which is able to offset the stress effects bringing by expansion, improve the structural stability of the anode material, can effectively suppress volume expansion of the anode material, decrease the expansion rate, and improve cell cycle performance.

The porosity is tested by a mercury intrusion method using a mercury porosimeter. The porosity is tested at least three times, using an arithmetic average of the at least three times as a result of the assay.

The pressure-resistant hardness is tested by a nanoindentation, using a method with a load of 0.6 N, an indentation depth of 0.5 $\mu$m.

In some embodiments, the aggregate has a porosity of $\leq10\%$, and the porosity of the aggregate may be specifically 10%, 9%, 9.5%, 8%, 8.5%, 7.5%, 7%, 6.5%, 6%, or 5%, and so on, or other values within the above ranges, which are not limited herein. It is understood that the aggregate has a low porosity, i.e, its solidity is high, facilitating the formation of a stable solid electrolyte film, reducing the contact of the electrolyte with the active material. Preferably, the aggregate has a porosity of $\leq5\%$, more preferably, the aggregate has a porosity of $\leq3\%$.

The aggregate has a pressure-resistant hardness of $\geq100$ MPa; and the pressure-resistant hardness of the aggregate may be specifically 100 MPa, 150 MPa, 250 MPa, 300 MPa, 450 MPa, 500 MPa, 750 MPa, 900 MPa, 1150 MPa, 1200 MPa, or 1250 MPa, and so on, or other values within the above ranges, which are not limited herein. Because it has strong rigidity, and the structural stability of the particles is strong, which offset a certain volume expansion stress, thereby reducing expansion, improving battery cycling stability. Preferably, the aggregate has a pressure-resistant hardness of ≥200 MPa, more preferably, the aggregate has a pressure-resistant hardness of ≥400 MPa.

In some embodiments, the density of the aggregate satisfies the following relationship: the difference between the test density and the theoretical density of the aggregate is ≤5%. The closer the density of the aggregate particle to the theoretical density, and the smaller the phase difference, the less the porosity inside the particles, and the more dense, which facilitate to form a stable solid electrolyte film, reducing the contact of the electrolyte with the active material.

Specifically, the density of the aggregate is calculated as follows: $(\rho 2-\rho 1)/\rho 2 \leq 5\%$, where $\rho 1$ is the test density of the aggregate, and $\rho 2$ is the theoretical density of the aggregate;
where $\rho 2$ is the sum of the values of the mass percentage content of each component in the aggregate * the theoretical density of each component.

In a specific example, when the aggregate includes an active material and a carbon material, $\rho 2$ = the mass percentage content of the active material in the aggregate * the theoretical density of the active material + the mass percentage content of the carbon material in the aggregate * the theoretical density of the carbon material.

In some embodiments, the aggregate further includes a metal oxide. Compounding the metal oxide with the active material can reduce expansion of the active material, improve long cycle performance, and the aggregate has a higher pressure-resistant hardness. It is noted that, at this point, the theoretical density $\rho 2$ of the aggregate = the mass percentage content of the active material in the aggregate * the theoretical density of the active material + the mass percentage content of the metal oxide in the aggregate * the theoretical density of the metal oxide + the mass percentage content of the carbon material in the aggregate * the theoretical density of the carbon material.

At this point, when the aggregate further includes a metal oxide, fluorine element is further distributed to the interior or surface of the metal oxide; when the F element is distributed inside the metal oxide, a part of the F element replaces the atoms in crystal structure of the metal oxide and forms a valence bond with the adjacent atom, and a part of the dopant element is distributed in lattice defect of crystal structure of the metal oxide. In particular, for example the metal oxide is $SnO_2$, the Sn atom in the crystal structure in $SnO_2$ is replaced, and forms a valence with the adjacent atoms or be distributed in the lattice defect of the crystal structure.

In some embodiments, at least a portion of the metal oxide is filled in the pores among the carbon materials.

In some embodiments, the metal oxide has a chemical formula of $M_xO_y$, $0.2 \leq y/x \leq 3$, where M includes at least one of Sn, Ge, Si, Fe, Cu, Ti, Na, Mg, Al, Ca, and Zn; specifically, the metal oxide can be any one of $GeO_2$, $SnO_2$, $ZnO$, $TiO_2$, $Fe_3O_4$, $MgO$, $SiO_2$, and $CuO$.

In some embodiments, the mass ratio of the active material to the metal oxide is (30 to 100):(0.5 to 10). Specifically, it may be 30:0.5, 40:1, 50:2, 60:2, 70:3, 80:6, 90:7.5, 100:10, or 100:2, and so on, or other values within the above ranges, which are not limited herein.

In some embodiments, the metal oxide is in a form of sheet and/or strip shape.

In some embodiments, the metal oxide has an aspect ratio greater than 2. It is noted that when the metal oxide is in a form of strip shape, the aspect ratio specifically refers to the ratio of length to particle size of the particle, where the particle size refers to the maximum straight-line distance between two points on the periphery of the cross-section perpendicular to the length of the metal oxide in the form of strip shape; when the metal oxide is in a form of sheet, the aspect ratio specifically refers to the ratio of length to width of the sheet metal oxide. Specifically, the metal oxide may have an aspect ratio of 2, 2.5, 3, 3.5, 4, 4.5, 5, 6, 7, 8, 9, 12, 15, 17, 18, 22, and so on, or other values within the above ranges, which are not limited herein. According to a number of experiments, it is found that when the aspect ratio of the metal oxide is greater than 2, the physical bonding force of the metal oxide to the active material can be increased, thereby offsetting the volume expansion variation of the active material, improving cycle performance.

In some embodiments, a shortest distance among the metal oxides is ≥100 nm. Controlling the shortest distance may enable the active material to be filled among the metal oxides, and the metal oxide may serves as a support for the structure to enhance the stability of the material, thereby offsetting the volume expansion variation of the active material, improving cycle performance. Specifically, it may be 100 nm, 150 nm, 200 nm, 250 nm, 300 nm or 400 nm, and so on. A shortest distance among the metal oxides of the present embodiment refers to the shortest straight line distance of any two metal oxide particles. Preferably, the spacing of the metal oxides is ≥200 nm. The distance test method is as follows: sectioning with any of the metal oxide and preparing a sample, selecting optionally the particles therein, testing the shortest distance between any two metal oxides in the particle, where the test is performed not less than 50 times, and an average value is taken.

In some embodiments, the aggregate further includes a conductive enhancer. The conductive enhancer, in one aspect, can provide more carrier transport channels, thereby enhancing the transport of carriers inside the material; on the other hand, while also providing an excellent mechanical property, which may serves as a support for the structure to enhance the stability of the material.

At this point, when the aggregate further includes a conductive enhancer, fluorine element is further distributed to the interior or surface of the conductive enhancer material; when the F element is distributed inside the conductive enhancer material, a part of the F element replaces the atoms in crystal structure of the conductive enhancer material and forms a valence bond with the adjacent atom, and a part of the dopant element is distributed in lattice defect of crystal structure of the conductive enhancer material.

When the aggregate includes an active material, a conductive enhancer, and a carbon material, $\rho2$ = the mass percentage content of the active material in the aggregate * the theoretical density of the active material + the mass percentage content of the conductive enhancer in the aggregate * the theoretical density of the conductive enhancer + the mass percentage content of the carbon material in the aggregate * the theoretical density of the carbon material.

When the aggregate includes an active material, a metal oxide, a conductive enhancer, and a carbon material, $\rho2$ = the mass percentage content of the active material in the aggregate * the theoretical density of the active material + the mass percentage content of the metal oxide in the aggregate * the theoretical density of the metal oxide + the mass percentage content of the conductive enhancer in the aggregate * the theoretical density of the conductive enhancer + the mass percentage content of the carbon material in the aggregate * the theoretical density of the carbon material.

In some embodiments, at least a portion of the conductive enhancer is filled in the pores among the carbon materials.

In some embodiments, the conductive enhancer includes at least one of an alloy material and a conductive carbon; where the alloy material may include at least one of a zinc alloy, an aluminum alloy, a copper alloy, a silicon alloy, a nickel alloy, and a titanium alloy, and the conductive carbon may include at least one of carbon nanotube, carbon fiber, and graphite fiber.

In some embodiments, the conductive enhancer has a conductivity of $10^0$ S/m to $10^8$ S/m. Specifically, the conductivity of the conductive enhancer may be 1 S/m, 10 S/m, 100 S/m, $10^3$ S/m, $10^4$ S/m, $10^5$ S/m or $10^8$ S/m, and so on. The conductivity of the anode material is tested using a powder resistivity tester.

In some embodiments, the conductive enhancer is in a form of sheet and/or strip shape.

In some embodiments, a mass ratio of the conductive enhancer to the active material is (0.01 to 15):(50 to 100). Specifically, it may be 0.01:50, 15:50, 0.05:55, 0.1:60, 1:50, 5:60, 7.5:75, 10:80, or 15:100, and so on, or other values within the above ranges, which are not limited herein.

In some embodiments, the conductive enhancer has an aspect ratio of 2 to 5000. It is noted that when the conductive enhancer is in a form of strip shape, the aspect ratio specifically refers to the ratio of length to particle size of the particle, where the particle size refers to the maximum straight-line distance between two points on the periphery of the cross-section perpendicular to the length of the conductive enhancer in the form of strip shape; when the conductive enhancer is in a form of sheet, the aspect ratio specifically refers to the ratio of length to width of the sheet conductive enhancer. Specifically, the conductive enhancer may have an aspect ratio of 2, 30, 46, 150, 360, 670, 800, 900, 1500, 2000, 3000, 4000, 5000, and so on, or other values within the above ranges, which are not limited herein. According to a number of experiments, it has been found that the conductive enhancer with an aspect ratio in this range has a superior mechanical property, may serves as a support for the structure to enhance the stability of the material, thereby offsetting the volume expansion variation of the active material, improving cycling performance.

In some embodiments, the anode material further includes a carbon layer coated on at least a portion of the surface of the aggregate. Preferably, the carbon layer is distributed over the surface of the aggregate. The carbon layer is capable of reducing the contact of the active material with the electrolyte, reducing the generation of a passivation film, and increasing the reversible capacity of the battery.

In some embodiments, the material of the carbon layer includes amorphous carbon.

In some embodiments, the carbon layer has a thickness of 10 nm to 5000 nm. Specifically, the thickness of the carbon layer may be 10 nm, 50 nm, 100 nm, 400 nm, 500 nm, 750 nm, 1000 nm, 1500 nm, 2000 nm, 2500 nm, 3000 nm, 4000 nm, 5000 nm, and so on, or other values within the above ranges, which are not limited herein. When the carbon layer is too thick, it does not facilitate high rate charge and discharge of the material, reducing the comprehensive performance of the anode material; when the carbon layer is too thin, it does not facilitate to increase the conductivity of the anode material, and the volume expansion inhibition performance of the material is weak, resulting in a poor long cycle performance.

In some embodiments, the anode material has a median particle diameter of 0.5 $\mu$m to 30 $\mu$m. Specifically, it may be 0.5 $\mu$m, 1.5 $\mu$m, 3 $\mu$m, 10 $\mu$m, 16 $\mu$m, 26 $\mu$m, and so on, or other values within the above ranges, which are not limited herein. It is understood that when the median particle diameter of the anode material is controlled within the above ranges, it facilitates to improve cycling performance of the anode material. Preferably, the anode material has a median particle diameter of 1.5 $\mu$m to 15 $\mu$m.

In some embodiments, the anode material has a specific surface area of $\leq$10 m$^2$/g. Specifically, it is 10 m$^2$/g, 7 m$^2$/g, 6 m$^2$/g, 4 m$^2$/g, 2 m$^2$/g, 1 m$^2$/g, and so on, or other values within the above ranges, which are not limited herein. It is understood that when the specific surface area of anode material is controlled within the above range, it facilitates to offset volume expansion, and to improve the cycling performance of the anode material. The anode material has a specific surface area of $\leq$5 m$^2$/g. The specific surface area of the anode material is tested using a Micromeritics specific surface area analyzer.

In some embodiments, a mass ratio of the aggregate to the carbon layer is (90 to 10):(10 to 90). Specifically, it may be 90:10, 80:20, 70:30, 60:40, 50:50, 40:60, 30:70, 20:80, 10:90, and so on, which are not limited herein.

In some embodiments, the anode material further includes an oxide layer formed on at least a portion of the surface of the active material; when the active material is a silicon particle, the oxide layer is silicon oxide.

In some embodiments, the oxide layer has a thickness of 1 nm to 100 nm. The thickness of the oxide layer may be 1 nm, 10 nm, 20 nm, 30 nm, 40 nm, 50 nm, 60 nm, 70 nm, 80 nm, 90 nm, 100 nm, and so on, or other values within the above ranges, which are not limited herein.

In some embodiments, the oxide layer has pores, thereby providing space for the expansion of the active material, and reducing the volume expansion effect of the active material.

It is noted that the anode material of the various embodiments described above may be combined optionally without contradiction, such as a combined limitation of the pressure-resistant hardness, porosity and density of the aggregate.

As shown in FIG. 1, a preparation method of anode material according to another embodiment, includes the following:

Step S100: mixing an active material, a dopant, a first carbon source and a solvent to prepare a precursor;
Step S200, undergoing the precursor a primary heat treatment at 800°C to 980°C to obtain an aggregate; and
Step S300, undergoing the aggregate a carbon coating process to obtain the anode material.

The anode material prepared by the preparation method of this embodiment include an aggregate and a carbon layer coated on the surface of the aggregate, and the aggregate includes an active material, a carbon material, and a dopant element; where the carbon material is shown in a Raman spectrum obtained by Raman spectroscopy using a measurement light source having a wavelength of 532 nm that a G band is observed at 1530 cm$^{-1}$ to 1630 cm$^{-1}$, and a D band is observed at 1280 cm$^{-1}$ to 1380 cm$^{-1}$, and a ratio $I_D/I_G$ of between peak intensity $I_D$ of the D band and peak intensity $I_G$ of the G band is 1 to 2.5.

By adding a dopant to the active material and the carbon source, the addition of the dopant may promote bonding of the carbon material to the active material, and furthermore the degree of graphitization of the carbon material may be increased, thereby improving conductivity. The induction of the dopant element in the carbon material generates an active site with high activity and selectivity. The active site in one aspect is more easily combined with surface of the active material to form more firm connection; on the other hand, as the activity increasing, the energy barrier decreases, the rearrangement resistance of the carbon atoms decreases, the ordered arrangement is more easily formed during the high temperature heat treatment, it appears that order in local short range increase, and the degree of graphitization is partly increased. Moreover, the addition of the dopant facilitates to improving the stability of the interface of the active material, thereby increasing the cycling stability of the material; the initial efficiency, the expansion rate, and the cycle life of the anode material are improved.

The preparation method of the present application are described in detail below in connection with the embodiments:

In step S100, mixing an active material, a dopant, a first carbon source, and a solvent to prepare a precursor.

In some embodiments, the active material has a median particle diameter of 1 nm to 300 nm. Specifically, it may be 1 nm, 20 nm, 30 nm, 40 nm, 50 nm, 60 nm, 70 nm, 80 nm, 90 nm, 100 nm, 120 nm, 150 nm, 200 nm, 250 nm, 300 nm, and so on, or other values within the above ranges, which are not limited herein. Controlling the median particle diameter of the active material to be within the ranges described above facilitates to improve cycling performance of the anode material.

In some embodiments, the active material includes at least one of Li, Na, K, Sn, Ge, Si, SiO$_x$ (0<x≤2), Fe, Mg, Ti, Zn, Al, P, or Cu; and the active material may be an elemental metal. In some embodiments, the active material may be specifically a Si particle, a Sn particle, a Ge particle, an Al particle. In other embodiments, the active material may also be a silicon lithium alloy, a silicon magnesium alloy, and so on. Of course, it is noted that in some cases, the active material includes an elemental particle and an alloy.

In some embodiments, when the active material is SiO$_x$ (0<x≤2), the dopant is fluoride, the addition of fluoride can be effective to promote the disproportionation of SiO$_x$ to form Si and SiO$_2$, thereby forming a more uniform SiO$_2$ coating layer, facilitating stabilization and improvement of the interface of silicon, and improving the cycling stability of the material. Moreover, the fluoride etches the oxide layer on the surface of the silicon to obtain pores, thereby providing space for silicon expansion, and reducing the volume expansion effect of silicon.

In some embodiments, the dopant includes at least one of a fluorine source, a phosphorus source, and a nitrogen source. With this type of dopant, the difference in electronegativity between the doped atom and the carbon atom is great. Thus the introduction of the dopant atom causes the charge distribution of the carbon atom to be non-uniform, to generate a Lewis acid site. The active site, on one hand, is more easily combined with surface of the active material to form more firm connection; on the other hand, as the activity increasing, the energy barrier decreases, the rearrangement resistance of the carbon atoms decreases, the ordered arrangement is more easily formed during the high temperature heat treatment, it appears that order in local short range increase, and the degree of graphitization is partly increased. Moreover, the addition of the dopant element facilitates to improving the stability of the interface of the active material, thereby increasing the cycling stability of the material; the initial efficiency, the expansion rate, and the cycle life of the anode material are improved.

In some embodiments, the fluorine source includes a fluoride, and the fluoride includes at least one of hydrogen fluoride, lithium fluoride, ammonium fluoride, potassium fluoride, aluminum fluoride, magnesium fluoride, sodium fluoride, calcium fluoride, tetrabutyl ammonium fluoride, triethyl methoxymethyl ammonium fluoride, ammonium fluoroborate, and tetrabutyl ammonium fluoroborate.

In some embodiments, the phosphorus source includes at least one of triphenyl phosphine, tetraphenyl phosphonium bromide, 1-butyl-3-methylimidazolium sodium hexafluorophosphate, phosphine, sodium phosphate, sodium phosphite, elemental phosphorus, sodium hydrogen phosphate, sodium dihydrogen phosphate, sodium hydrogen phosphite, and phosphoric acid.

In some embodiments, the nitrogen source includes at least one of ammonia, ammonium chloride, ammonium carbonate, ammonium bicarbonate, urea, thiourea, lithium nitride, melamine, and hydrazine hydrate.

In some embodiments, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, mass ratio of the active material, the dopant, and the first carbon source is (30 to 120):(0.9 to 20):(10 to 50). Specifically, the mass ratio of the active material, the dopant, and the first carbon source may be 30:0.9:10, 40:5:15, 70:10:20, 60:12:30, 80:20:50, 100:10:10, 110:5:20, 120:3:15, and so on, or other values within the above ranges, which are not limited herein.

In some embodiments, the solvent includes organic solvent. Specifically the organic solvent includes at least one of methanol, ethanol, ethylene glycol, propanol, isopropanol, glycerol, n-butanol, isobutanol, and pentanol. Adding the various components into organic solvent and performing wet ball milling can improve mixing uniformity of the components, and facilitate rapid drying.

In some embodiments, the process of mixing an active material, a dopant, a first carbon source, and a solvent is specifically: dispersing the active material in the organic solvent and adding the dopant and the first carbon source.

In some embodiments, the process of preparing the precursor further includes performing at least one of dispersion treatment and drying treatment after mixing the active material, the dopant, the first carbon source, and the solvent.

Preferably, performing dispersion treatment and drying treatment in sequence after mixing the active material, the dopant, the first carbon source, and the solvent.

In some embodiments, the dispersion treatment includes at least one mechanical stirring, ultrasonic dispersion, and grinding dispersion; which can avoid agglomeration of particles and allow the active material to disperse into smaller nanoparticles.

In some embodiments, a temperature of the drying treatment is 30°C to 400°C. Specifically, it may be 30°C, 40°C, 50°C, 80°C, 100°C, 120°C, 150°C, 180°C, 200°C, 250°C, 280°C, 300°C, or 400°C, and so on. A time of the drying treatment is 1 h to 15 h. Specifically, it may be 1 h, 3 h, 5 h, 7 h, 9 h, 10 h, 12 h, or 15 h, and so on. The manner of the drying treatment may be, for example, oven drying, freeze drying, blending steaming, and spray drying, and so on. The drying treatment in the present embodiment may remove the solvent in precursor solution as much as possible.

In some embodiments, an additive is also added in the process of mixing an active material, a dopant, a first carbon source, and a solvent. The additives in this embodiment may be effective to improve the stability of the connection of the active material to the carbon material, thereby forming a strong system.

In some embodiments, the additive includes at least one of a surfactant and a coupling agent. It has been found through experiments that employing this kind of additive is effective to improve the stability of the connection of the active material to the carbon material to form a strong system, reducing porosity; thereby reducing the expansion rate of the anode material, and increasing cycling stability.

Specifically, the surfactant includes, but is not limited to, at least one of n-octadecanoic acid, lauric acid, polyacrylic acid (PAA), sodium dodecyl benzene sulfonate (SDBS), n-eicosanoic acid, palmitic acid, tetradecanoic acid, undecanoic acid, cetyl trimethyl ammonium bromide, and polyvinyl pyrrolidone (PVP).

The coupling agent includes silane coupling agent. Specifically, the silane coupling agent includes, but not limited to, at least one of γ-aminopropyl triethoxy silane, γ-glycidoxypropyl trimethoxy silane, and γ-methacryloxypropyl trimethoxy silane.

In some embodiments, a mass ratio of the active material to the additive is (50 to 100):(0.01 to 5).

In some embodiments, at least one of a metal oxide and a conductive enhancer is also added in the process of mixing an active material, a dopant, a first carbon source, and a solvent.

In some embodiments, the metal oxide has a chemical formula of $M_xO_y$, $0.2 \leq y/x \leq 3$, where M includes at least one of Sn, Ge, Si, Fe, Cu, Ti, Na, Mg, Al, Ca, and Zn.

In some embodiments, the metal oxide is in a form of sheet and/or strip shape.

In some embodiments, the metal oxide has an aspect ratio greater than 2.

In some embodiments, a mass ratio of the conductive enhancer to the active material is (0.01 to 15):(50 to 100).

In some embodiments, the conductive enhancer has a conductivity of $10^0$ S/m to $10^8$ S/m.

In some embodiments, the conductive enhancer is in a form of sheet and/or strip shape.

In some embodiments, the conductive enhancer has an aspect ratio of 2 to 5000.

In some embodiments, the conductive enhancer includes at least one of an alloy material and a conductive carbon.

In some embodiments, before undergoing the precursor a primary heat treatment, the preparation method further includes undergoing the precursor a densification treatment, such that the aggregate has a porosity of ≤10% and a pressure-resistant hardness of ≥100 MPa.

In some embodiments, the densification treatment includes at least one of a fusion process, a blending process, a moulding process, an isostatic pressing process, and an impregnation process.

In some embodiments, the fusion process is mechanical fusion. Undergoing the precursor a fusion process increases the pressure-resistant hardness of the anode material, and further undergoing the precursor a primary heat treatment improves the stability of the particle structure as well as improves the stability of the connection between the active material and the first carbon source and reduces porosity. Of course, in other embodiments, other processes may also be employed for the densification treatment, such as moulding, isostatic pressing, impregnation, and so on, providing the aggregate has a porosity of ≤10% and a pressure-resistant hardness of ≥100 MPa.

In some embodiments, a rotating speed of fusion machine used for the mechanical fusion is 500 r/min to 3000 r/min;

In some embodiments, a blade gap width of the fusion machine used for mechanical fusion is 0.01 cm to 0.5 cm;

In some embodiments, a time of the mechanical fusion is at least 0.5 h.

In step S200, undergoing the precursor a primary heat treatment at 800°C to 980°C to obtain an aggregate.

In some embodiments, the primary heat treatment may be, for example, vacuum sintering, hot-pressed sintering, or atmospheric sintering. A temperature of the primary heat treatment is 800°C to 980°C. Specifically, it may be 800°C, 810°C, 820°C, 830°C, 840°C, 850°C, 860°C, 870°C, 880°C, 890°C, 900°C, 910°C, 920°C, 930°C, 940°C, 950°C, 960°C, 970°C, 980°C, and so on, or other values within the above ranges, which are not limited herein.

In some embodiments, a time of the primary treatment is 1 h to 5 h. Specifically, it may be 1 h, 2 h, 3 h, 4 h, 5 h, and so on, or other values within the above ranges, which are not limited herein.

In some embodiments, the primary heat treatment is performed in a first protective atmosphere. Specifically, the gas of the first protective atmosphere includes at least one of nitrogen, helium, neon, argon, and krypton.

In some embodiments, a crushing process is performed after the primary heat treatment, where the manner of the crushing is by means of any one of a mechanical shredder, a gas flow shredder, and a low temperature shredder.

Step S300, undergoing the aggregate a carbon coating process to obtain the anode material.

It is noted that the anode material of the present embodiment may not be carbon coated, in this case the step S300 may be omitted.

In some embodiments, the carbon coating process may be specifically: mixing the aggregate with a second carbon source for secondary heat treatment.

In some embodiments, the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, a mass ratio of the aggregate to the second carbon source is (20 to 100):(10 to 80). The mass ratio of the aggregate to the second carbon source may be 20:10, 30:15, 50:60, 80:30, 90:20, 100:10, and so on, or other values within the above ranges, which are not limited herein.

In some embodiments, the secondary heat treatment may be, for example, vacuum sintering, hot-pressed sintering, or atmospheric sintering. A temperature of the secondary heat treatment is 800°C to 900°C. Specifically, it may be 800°C, 810°C, 820°C, 830°C, 840°C, 850°C, 860°C, 870°C, 880°C, 890°C, 900°C, and so on, or other values within the above ranges, which are not limited herein.

In some embodiments, a time of the secondary heat treatment is 1 h to 5 h. Specifically, it may be 1 h, 2 h, 3 h, 4 h, 5 h, and so on, or other values within the above ranges, which are not limited herein.

In some embodiments, the secondary heat treatment is performed in a second protective atmosphere; where the gas of the second protective atmosphere includes at least one of nitrogen, helium, neon, argon, and krypton.

In some embodiments, after the secondary heat treatment, at least one of crushing, sieving and demagnetizing is further performed. Preferably, after the secondary heat treatment, crushing, sieving and demagnetizing are performed in sequence.

In some embodiments, the manner of the crushing is by means of any one of a mechanical shredder, a gas flow shredder, and a low temperature shredder.

In some embodiments, the manner of the sieving is by means of any one of a fixed sieve, a drum screen, a resonance screen, a roller screen, a vibratory screen, and a chain sieve, where a number of the sieving is ≥500 mesh. Specifically, a mesh number of the sieving may be 500 mesh, 600 mesh, 700 mesh, 800 mesh, and so on. Controlling the particle size of the anode material within the above ranges facilitates increasing cycling performance of the anode material.

In some embodiments, a device for the demagnetizing is any one of a permanent magnet drum separator, an electromagnetic deferromagnetic machine, and a pulsating high gradient magnetic separator. The demagnetizing is to control the magnetic material content of resulting anode material, to avoid affecting of the magnetic material on the discharging effect of the lithium ion and the safety of the battery in using.

The present application also provides a lithium ion battery including an anode material as described above, or an anode material prepared by the preparation method described above.

The median particle diameter (D50) in the present disclosure, i.e., the average particle size, is a volume distribution median (Dv50), the physical meaning of which is the particle size when the cumulative volume particle size distribution percentage of the particles reaches 50%, which is tested by a Malvern particle size meter. The Malvern particle size meter uses the scattering phenomenon of the particles to light, to comprehensively calculate the particle size distribution of the particles under test according to the distribution of the scattered light energy. Herein, the anode material is not used directly for testing the median particle size of the active material thereof, which is tested by the method including: a sample of the anode material is sliced and specimen-prepared to obtain an observable thin cross-sectional specimen; a qualified specimen is placed in a transmission electron microscope (TEM), selected a typical observation area under adjusted equipment parameters, and observed and quantitatively measured the microscopic size of the active material.

The embodiments of the present application are further illustrated by the following several examples. The embodiments herein are not limited to the specific examples described below. Variations may be made as appropriate within the scope of the independent claims.

**Example 1**

The preparation method of anode material of the present example including the following:

1) The silicon particles having a median particle diameter of 50 nm were dispersed in an ethanol solution (40% of volume percentage concentration), and then triethyl methoxymethyl ammonium fluoride and phenolic resin were added and mixed uniformly, where the mass ratio of silicon particles, triethyl methoxymethyl ammonium fluoride and phenolic resin was 50:4.3:24.5. Then a drying process was performed in a drying temperature of 150°C and a drying time of 5 h, to obtain a precursor;

2) The precursor was placed in a heat treatment furnace, an argon was introduced, and the temperature was heat up to 900°C, for reacting for 3 h to obtain an aggregate;

3) The aggregates and an asphalt were mixed in a mass ratio of 40:30, stirred, dispersed uniformly, then performed a drying process in a drying temperature of 150°C and a drying time of 5 h. The dried material was added into a high temperature box furnace, a nitrogen gas was introduced, a heat treatment was performed at 890°C for 3 h, followed by crushing, and sieving through a 500 mesh screen, and an anode material was obtained.

The anode material prepared by this example includes an aggregate, and a carbon layer coated on the surface of the aggregate, where the aggregate includes silicon powder, a carbon material, and fluorine element doped in the carbon material and the silicon powder. The anode material has a median particle diameter of 13 $\mu$m and a specific surface area of 6.2 m$^2$/g. The carbon layer has an average thickness of 559 nm. The aggregate has a fluorine element content of 600 ppm. The carbon material was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 2.01.

The aggregate particles were tested by a mercury intrusion method, resulting in a porosity of the aggregate of 10.6%. The aggregate particles were tested by a nanoindentation, resulting in a pressure-resistant hardness of the aggregate of 45 MPa in average. The difference between the theoretical density and the test density of the aggregate is 2.1%.

**Example 2**

The preparation method of anode material of the present example including the following:

1) The silicon particles having a median particle diameter of 70 nm were dispersed in an ethanol solution (40% of volume percentage concentration), and then triethyl methoxymethyl ammonium fluoride and sucrose were added and mixed uniformly, where the mass ratio of silicon particles, triethyl methoxymethyl ammonium fluoride, and sucrose was 39:1.3:38.4. Then a drying process was performed in a drying temperature of 200°C and a drying time of 3.5 h, to obtain a precursor;

2) The precursor was placed in a heat treatment furnace, an argon was introduced, and the temperature was heat up to 920°C, for reacting for 4 h to obtain an aggregate;

3) After crushing the aggregate, the aggregate and a phenolic resin were mixed in a mass ratio of 30:40, stirred, dispersed uniformly, then performed a drying process. Then the dried material was added into a high temperature box furnace, a nitrogen gas was introduced, a heat treatment was performed at 890°C for 3 h, followed by crushing, and sieving through a 500 mesh screen, and an anode material was obtained.

The anode material prepared by this example includes an aggregate, and a carbon layer coated on the surface of the aggregate, where the aggregate includes silicon powder, a carbon material, and fluorine element doped in the carbon material and the silicon powder. The anode material has a median particle diameter of 12.1 $\mu$m and a specific surface area of 3.2 m$^2$/g. The carbon layer has an average thickness of 739 nm. The aggregate has a fluorine element content of 920 ppm. The aggregate has a fluorine element content of 600 ppm. The carbon material was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 1.99.

## Example 3

The preparation method of anode material of the present example including the following:

1) The silicon particles having a median particle diameter of 30 nm were dispersed in ethylene glycol and ultrasonicated for 10 min. Then 1.5 wt% of $H_2O_2$ additive was added and ultrasonicated for 20 min, dried, and mixed with LiF and fructose to obtain a precursor; where the mass ratio of silicon particles, LiF, and fructose was 30:3:35;

2) The precursor was placed in a heat treatment furnace, an argon was introduced, and the temperature was heat up to 800°C, for reacting for 5 h to obtain an aggregate;

3) The aggregate and an asphalt were mixed in a mass ratio of 40:35, stirred, dispersed uniformly, then performed a drying process at 100°C for 5 h. Then the dried material was added to a high temperature box furnace, a nitrogen gas was introduced, a heat treatment was performed at 900°C for 2 h, followed by crushing, and sieving through a 500 mesh screen, and an anode material was obtained.

The anode material prepared by this example includes an aggregate and a carbon layer coated on the surface of the aggregate, where the aggregate includes silicon powder, a carbon material, and fluorine element doped in the carbon material and the silicon powder. The anode material has a median particle diameter of 12.1 $\mu$m and a specific surface area of 5.2 m$^2$/g. The carbon layer has an average thickness of 5.7 nm. The aggregate has a fluorine element content of 1030 ppm. The carbon material was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 1.94.

## Example 4

The preparation method of anode material of the present example including the following:

1) The silicon particles having a median particle diameter of 80 nm were dispersed in propanol and ultrasonicated for 10 min. Then $MgF_2$ and glucose were added and mixed uniformly, where the mass ratio of silicon particles, $MgF_2$ and glucose was 45:1.3:33.5, to obtain a precursor after drying at 250°C for 2 h;

2) The precursor was placed in a heat treatment furnace, an argon was introduced, and the temperature was heat up to 900°C, for reacting for 3 h to obtain an aggregate;

3) The aggregate and an asphalt were mixed in a mass ratio of 40:37, stirred, dispersed uniformly, then dried at 250°C for 2 h. Then the dried material was added to a high temperature box furnace, a nitrogen gas was introduced, a heat treatment was performed at 800°C for 3 h, followed by crushing, and sieving through a 500 mesh screen, and an anode material was obtained.

The anode material prepared by this example includes an aggregate and a carbon layer coated on the surface of the aggregate, where the aggregate includes silicon powder, a carbon material, and fluorine element doped in the carbon material and the silicon powder. The anode material has a median particle diameter of 9.1 $\mu$m and a specific surface area of 4.2 m$^2$/g. The carbon layer has an average thickness of 5.7 nm. The aggregate has a fluorine element content of 590 ppm. The carbon material was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 2.05.

## Example 5

The preparation method of anode material of the present example including the following:

1) The silicon particles having a median particle diameter of 20 nm were dispersed in butanol. Then tetrabutyl ammonium fluoride, polyvinyl chloride were added and mixed uniformly, where the mass ratio of silicon particles, tetrabutyl ammonium fluoride and polyvinyl chloride was 30:0.9:33.5, to obtain a precursor after drying at 300°C for 1 h;
2) The precursor was placed in a heat treatment furnace, an argon was introduced, and the temperature was heat up to 880°C, for reacting for 3 h to obtain an aggregate;
3) The aggregate and a phenolic resin were mixed in a mass ratio of 55:65, stirred, dispersed uniformly, then performed a drying process. Then the dried material was added to a high temperature box furnace, a nitrogen gas was introduced, a heat treatment was performed at 800°C for 3 h, followed by crushing, and sieving through a 500 mesh screen, and an anode material was obtained.

The anode material prepared by this example includes an aggregate and a carbon layer coated on the surface of the aggregate, where the aggregate includes silicon powder, a carbon material, and fluorine element doped in the carbon material and the silicon powder. The anode material has a median particle diameter of 15.1 $\mu$m and a specific surface area of 2.2 m$^2$/g. The carbon layer has an average thickness of 667 nm. The aggregate has a fluorine element content of 15060 ppm. The carbon material was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 1.85.

## Example 6

The preparation method of anode material of the present example including the following:

1) The silicon particles having a median particle diameter of 120 nm were dispersed in n-pentanol. Then ammonium borofluoride and glucose were added and mixed uniformly, where the mass ratio of silicon particles, ammonium borofluoride and glucose was 30:2.0:48.5, to obtain a precursor after drying at 300°C for 1 h;
2) The precursor was placed in a heat treatment furnace, an argon was introduced, and the temperature was heat up to 980°C, for reacting for 3 h to obtain an aggregate;
3) The aggregate and a phenolic resin were mixed in a mass ratio of 44:50, stirred, dispersed uniformly, then performed a drying process. Then the dried material was added to a high temperature box furnace, a nitrogen gas was introduced, a heat treatment was performed at 900°C for 3 h, followed by crushing, and sieving through a 500 mesh screen, and an anode material was obtained.

The anode material prepared by this example includes an aggregate and a carbon layer coated on the surface of the aggregate, where the aggregate includes silicon powder, a carbon material, and fluorine element doped in the carbon material and the silicon powder. The anode material has a median particle diameter of 10.1 $\mu$m and a specific surface area of 2.0 m$^2$/g. The carbon layer has an average thickness of 967 nm. The aggregate had a fluorine element content of 9620 ppm. The carbon material was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 1.9.

## Example 7

The preparation method of anode material of the present example including the following:

1) The silicon particles having a median particle diameter of 50 nm were dispersed in an ethanol solution (40% of volume percentage concentration) and then triethyl methoxymethyl ammonium fluoride and phenolic resin were added and mixed uniformly, where the mass ratio of silica particles, triethyl methoxymethyl ammonium fluoride and phenolic resin was 50:4.3:24.5. Then a drying process was performed in a drying temperature of 150°C and a drying time of 5 h, to obtain a precursor;

2) The precursor was placed in a fusion machine with a rotating speed of 500 r/min and a blade gap width of the fusion machine used for the mechanical fusion of 0.05 cm for a time of mechanical fusion of 0.5 h. The fused material was placed in a heat treatment furnace, an argon was introduced, and a primary heat treatment was performed at 900°C for 3 h, to obtain an aggregate;

3) The aggregate and an asphalt were mixed in a mass ratio of 40:30, stirred, dispersed uniformly, then performed a drying process in a drying temperature of 150°C and a drying time of 5 h. The dried material was added into a high temperature box furnace, a nitrogen gas was introduced, a heat treatment was performed at 890°C for 3 h, followed by crushing, and sieving through a 500 mesh screen, and an anode material was obtained.

The anode material prepared by this example includes an aggregate, and a carbon layer coated on the surface of the aggregate, where the aggregate includes silicon powder, a carbon material, and fluorine element doped in the carbon material and the silicon powder. The anode material has a median particle diameter of 13 $\mu$m and a specific surface area of 6.2 m$^2$/g. The carbon layer has an average thickness of 559 nm. The aggregate has a fluorine element content of 600 ppm. The carbon material was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D$/$I_G$ of between peak intensity $I_D$ of the D band and peak intensity $I_G$ of the G band is 2.49. The aggregate particles were tested by a mercury intrusion method, resulting in a porosity of the aggregate of 4.4%. The aggregate particles were tested by a nanoindentation, resulting in a pressure-resistant hardness of the aggregate of 223 MPa in average. The difference between the theoretical density and the test density of the aggregate is 2.1%.

## Example 8

The preparation method of anode material of the present example including the following:

1) The Ge particles having a median particle diameter of 20 nm were dispersed in butanol. Then tetrabutyl ammonium fluoride and polyvinyl chloride were added and mixed uniformly, where the mass ratio of Ge particles, tetrabutyl ammonium fluoride and polyvinyl chloride was 100:20:50, to obtain a precursor after drying at 300°C for 1 h;

2) The precursor was placed in a fusion machine with a rotating speed of 1500 r/min and a blade gap width of the fusion machine used for the mechanical fusion of 0.3 cm for a time of mechanical fusion of 1 h. The fused material was placed in a heat treatment furnace, an argon was introduced, and a primary heat treatment was performed at 900°C for 3 h, to obtain an aggregate;

3) The aggregate and an asphalt were mixed in a mass ratio of 50:10, stirred, dispersed uniformly, then performed a drying process in a drying temperature of 150°C and a drying time of 5 h. The dried material was added into a high temperature box furnace, a nitrogen gas was introduced, a heat treatment was performed at 890°C for 3 h, followed by crushing, and sieving through a 500 mesh screen, and an anode material was obtained.

The anode material prepared by this example includes an aggregate, and a carbon layer coated on the surface of the aggregate, where the aggregate includes silicon powder, a carbon material, and fluorine element doped in the carbon material and the silicon powder. The anode material had a median particle diameter of 12 $\mu$m and a specific surface area of 5.9 m$^2$/g. The carbon layer had an average thickness of 102 nm. The aggregate had a fluorine element content of 8040 ppm. The aggregate particles were tested by a mercury intrusion method, resulting in a porosity of the aggregate of 4.3%. The aggregate particles were tested by a nanoindentation, resulting in a pressure-resistant hardness of the aggregate of 198 MPa in average. The difference between the theoretical density and the test density of the aggregate is 1.8%.

## Example 9

The difference between this example and Example 1 was that step 1) was different, where in step 1), an additive was further added.

Specifically, step 1) was that the silicon particles having a median particle diameter of 50 nm were dispersed in an ethanol solution (40% of volume percentage concentration), and then triethyl methoxymethyl ammonium fluoride, phenolic resin and lauric acid were added and mixed uniformly, where the mass ratio of silicon particles, triethyl methoxymethyl ammonium fluoride, phenolic resin and lauric acid was 50:4.3:24.5:3.3. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a carbon material, and fluorine element doped in the carbon material and the silicon powder. The anode material has a median particle diameter of 13 $\mu$m and a specific surface area of 6.2 m$^2$/g. The carbon layer has an average thickness of 559 nm. The aggregate has a fluorine element content of 602 ppm. The aggregate particles were tested by a mercury intrusion method, resulting in a porosity of the aggregate of 11.5%. The aggregate particles were tested by a nanoindentation, resulting in a pressure-resistant hardness of the aggregate of 69 MPa in average. The difference between the theoretical density and the test density of the aggregate is 2.6%.

**Example 10**

The difference between this example and Example 7 was that step 1) was different, where in step 1), an additive was further added.

Specifically, step 1) was that The silicon particles having a median particle diameter of 50 nm were dispersed in an ethanol solution (40% of volume percentage concentration) and then triethyl methoxymethyl ammonium fluoride, phenolic resin and $\gamma$-aminopropyl triethoxy silane were added and mixed uniformly, where the mass ratio of silica particles, triethyl methoxymethyl ammonium fluoride, phenolic resin and $\gamma$-aminopropyl triethoxy silane was 50:4.3:24.5:3.3. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a carbon material, and fluorine element doped in the carbon material and the silicon powder. The anode material has a median particle diameter of 13 $\mu$m and a specific surface area of 6.2 m$^2$/g. The carbon layer has an average thickness of 559 nm. The aggregate has a fluorine element content of 605 ppm. The aggregate particles were tested by a mercury intrusion method, resulting in a porosity of the aggregate of 3.6%. The aggregate particles were tested by a nanoindentation, resulting in a pressure-resistant hardness of the aggregate of 365 MPa in average. The difference between the theoretical density and the test density of the aggregate is 2.2%.

**Example 11**

The difference between this example and Example 1 was that step 1) was different, where in step 1), a metal oxide was further added.

Specifically, step 1) was that the silicon particles having a median particle diameter of 50 nm were dispersed in an ethanol solution (40% of volume percentage concentration), and then triethyl methoxymethyl ammonium fluoride, phenolic resin and GeO$_2$ particles having an aspect ratio of 12 were added and mixed uniformly, where the mass ratio of silicon particles, triethyl methoxymethyl ammonium fluoride, phenolic resin and GeO$_2$ particles was 50:4.3:24.5:1.9. Then a drying process was performed in a drying temperature of 150°Cand a drying time of 5 h, to obtain a precursor.

The anode material prepared by this example includes an aggregate, and a carbon layer coated on the surface of the aggregate, where the aggregate includes silicon powder, a GeO$_2$ particle, a carbon material, and fluorine element doped in the carbon material, the GeO$_2$ particle and the silicon powder. The anode material has a median particle diameter of 13 $\mu$m and a specific surface area of 6.2 m$^2$/g. The carbon layer has an average thickness of 559 nm. The aggregate has a fluorine element content of 601 ppm. The aggregate particles were tested by a mercury intrusion method, resulting in a porosity of the aggregate of 10.2%. The aggregate particles were tested by a nanoindentation, resulting in a pressure-resistant hardness of the aggregate of 78 MPa in average. The difference between the theoretical density and the test density of the aggregate is 2.3%. The minimum value of the spacing among the metal oxides is 26 nm.

**Example 12**

The difference between this example and Example 7 was that step 1) was different, where in step 1), a metal oxide was further added.

Specifically, step 1) was that The silicon particles having a median particle diameter of 50 nm were dispersed in an ethanol solution (40% of volume percentage concentration) and then triethyl methoxymethyl ammonium fluoride, phenolic resin and ZnO particles having an aspect ratio of 8 were added and mixed uniformly, where the mass ratio of silica particles, triethyl methoxymethyl ammonium fluoride, phenolic resin and ZnO particles was 50:4.3:24.5:3.6. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a ZnO particle, a carbon material, and fluorine element doped in the carbon material, the ZnO particle and the silicon powder. The anode material has a median particle diameter of 13 $\mu$m and a specific surface area of 6.2 m$^2$/g. The carbon layer has an average thickness of 559 nm. The aggregate has a fluorine element content of 608 ppm. The aggregate particles were tested by a mercury intrusion method, resulting in a porosity of the aggregate of 5.0%. The aggregate particles were tested by a nanoindentation, resulting in a pressure-resistant hardness of the aggregate of 284 MPa in average. The difference between the theoretical density and the test density of the aggregate is 1.9%. The minimum value of the spacing among the metal oxides is 106 nm.

**Example 13**

The difference between this example and Example 1 was that step 1) was different, where in step 1), a conductive enhancer was further added.

Specifically, step 1) was that The silicon particles having a median particle diameter of 50 nm were dispersed in an ethanol solution (40% of volume percentage concentration) and then triethyl methoxymethyl ammonium fluoride, phenolic resin and carbon nanotubes (CNT) having a diameter of 20 nm and an aspect ratio of 500 were added and mixed uniformly, where the mass ratio of silica particles, triethyl methoxymethyl ammonium fluoride, phenolic resin and CNT was 50:4.3:24.5:0.5. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a CNT, a carbon material, and fluorine element doped in the carbon material, the CNT and the silicon powder. The anode material has a median particle diameter of 13 $\mu$m and a specific surface area of 6.2 m$^2$/g. The carbon layer has an average thickness of 559 nm. The aggregate has a fluorine element content of 600 ppm. The aggregate particles were tested by a mercury intrusion method, resulting in a porosity of the aggregate of 10.7%. The aggregate particles were tested by a nanoindentation, resulting in a pressure-resistant hardness of the aggregate of 62 MPa in average. The difference between the theoretical density and the test density of the aggregate is 3.6%.

**Example 14**

The difference between this example and Example 7 was that step 1) was different, where in step 1), a conductive enhancer was further added.

Specifically, step 1) was that The silicon particles having a median particle diameter of 50 nm were dispersed in an ethanol solution (40% of volume percentage concentration) and then triethyl methoxymethyl ammonium fluoride, phenolic resin and FeSi$_2$ having an aspect ratio of 18 were added and mixed uniformly, where the mass ratio of silica particles, triethyl methoxymethyl ammonium fluoride, phenolic resin and CNT was 50:4.3:24.5:2.1. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a FeSi$_2$, a carbon material, and fluorine element doped in the carbon material, the FeSi$_2$ and the silicon powder. The anode material has a median particle diameter of 13 $\mu$m and a specific surface area of 6.2 m$^2$/g. The carbon layer has an average thickness of 559 nm. The aggregate has a fluorine element content of 610 ppm. The aggregate particles were tested by a mercury intrusion method, resulting in a porosity of the aggregate of 4.5%. The aggregate particles were tested by a nanoindentation, resulting in a pressure-resistant hardness of the aggregate of 205 MPa in average. The difference between the theoretical density and the test density of the aggregate is 1.2%.

**Example 15**

The difference between this example and Example 1 was that step 1) was different, where in step 1), a conductive enhancer and a metal oxide were further added.

Specifically, step 1) was that The silicon particles having a median particle diameter of 50 nm were dispersed in an ethanol solution (40% of volume percentage concentration) and then triethyl methoxymethyl ammonium fluoride, phenolic resin, SiO particles having an aspect ratio of 22 and carbon nanotubes (CNT) having a diameter of 20 nm were added and mixed uniformly, where the mass ratio of silica particles, triethyl methoxymethyl ammonium fluoride, phenolic resin, SiO particles and CNT was 50:4.3:24.5:2.9:0.3. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a SiO particle, a CNT, a carbon material, and fluorine element doped in the carbon material, the SiO particle, the CNT and the silicon powder. The anode material has a median particle diameter of 13 $\mu$m and a specific surface area of 6.2 m$^2$/g. The carbon layer has an average thickness of 559 nm. The aggregate has a fluorine element content of 590 ppm. The aggregate particles were tested by a mercury intrusion method, resulting in a porosity of the aggregate of 12.9%. The aggregate particles were tested by a nanoindentation, resulting in a pressure-resistant hardness of the aggregate of 99 MPa in average. The difference between the theoretical density and the test density of the aggregate is 2.1%.

**Example 16**

The difference between this example and Example 7 was that step 1) was different, where in step 1), a metal oxide and a conductive enhancer were further added.

Specifically, step 1) was that The silicon particles having a median particle diameter of 50 nm were dispersed in an ethanol solution (40% of volume percentage concentration) and then triethyl methoxymethyl ammonium fluoride, phenolic resin, $TiO_2$ particles having an aspect ratio of 17 and a nickel silicon alloy having an aspect ratio of 50 were added and mixed uniformly, where the mass ratio of silica particles, triethyl methoxymethyl ammonium fluoride, phenolic resin, $TiO_2$ particles and nickel silicon alloy was 50:4.3:24.5:3.9:1.1. Then a drying process was performed in a drying temperature of 150°C and a drying time of 5 h, to obtain a precursor.

The anode material prepared by this example includes an aggregate, and a carbon layer coated on the surface of the aggregate, where the aggregate includes silicon powder, a $TiO_2$ particle, a nickel silicon alloy, a carbon material, and fluorine element doped in the carbon material, the $TiO_2$ particle, the nickel silicon alloy and the silicon powder. The anode material has a median particle diameter of 13 $\mu$m and a specific surface area of 6.2 m$^2$/g. The carbon layer has an average thickness of 559 nm. The aggregate has a fluorine element content of 598 ppm. The aggregate particles were tested by a mercury intrusion method, resulting in a porosity of the aggregate of 10.9%. The aggregate particles were tested by a nanoindentation, resulting in a pressure-resistant hardness of the aggregate of 229 MPa in average. The difference between the theoretical density and the test density of the aggregate is 1.9%.

**Example 17**

The preparation method of anode material of the present example including the following:

1) The Al particles having a median particle diameter of 50 nm were dispersed in ethylene glycol and ultrasonicated for 10 min. Then 1.5 wt% of $H_2O_2$ additive was added and ultrasonicated for 20 min, dried, and mixed with aluminum fluoride and fructose to obtain a precursor; where the mass ratio of Al particles, aluminum fluoride, and fructose was 120:10:50;

2) The precursor was placed in a heat treatment furnace, an argon was introduced, and the temperature was heat up to 950°C, for reacting for 1.5 h to obtain an aggregate;

3) The aggregate and an asphalt were mixed in a mass ratio of 100:15, stirred, dispersed uniformly, then performed a drying process at 100°C for 5 h. Then the dried material was added to a high temperature box furnace, a nitrogen gas was introduced, a heat treatment was performed at 900°C for 2 h, followed by crushing, and sieving through a 500 mesh screen, and an anode material was obtained.

The anode material prepared by this example includes an aggregate and a carbon layer coated on the surface of the aggregate, where the aggregate includes Al powder, a carbon material, and fluorine element doped in the carbon material and the Al powder. The anode material has a median particle diameter of 11 $\mu$m and a specific surface area of 3.9 m$^2$/g. The carbon layer has an average thickness of 98 nm. The aggregate has a fluorine element content of 2190 ppm.

**Example 18**

The difference between this example and Example 1 was that no carbon coating is performed, i.e., step 3) was not included.

The anode material prepared by this example includes an aggregate, where the aggregate includes silicon powder, a carbon material, and fluorine element doped in the carbon material and the silicon powder. The anode material has a median particle diameter of 13 $\mu$m and a specific surface area of 26.2 m$^2$/g. The aggregate has a fluorine element content of 890 ppm.

**Example 19**

The nano-silicon-based composite anode material was prepared in substantially the same manner as in Example 5, except that the fluorine content in the aggregate is 20000 ppm, and the temperature of the heat treatment in step 2) was 980°C. The carbon material in this example was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 1.5.

**Example 20**

The nano-silicon-based composite anode material was prepared in substantially the same manner as in Example 5, except that the fluorine content in the aggregate is 21890 ppm, and then a heat treatment was performed.

The anode material prepared by this example includes an aggregate, and a carbon layer coated on the surface of the aggregate, where the aggregate includes silicon powder, a carbon material, and fluorine element, and a mass ratio of the silicon powder and the carbon material is 63.0:37.0. The anode material has a median particle diameter of 13.8 $\mu$m and a specific surface area of 6.6 m$^2$/g. The carbon layer has an average thickness of 565 nm. The aggregate has a fluorine element content of 21890 ppm. The carbon material in this example was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 1.8.

**Example 21**

The nano-silicon-based composite anode material was prepared in substantially the same manner as in Example 5, except that the fluorine content in the aggregate is 50 ppm, and the temperature of the heat treatment in step 2) was 980°C. The carbon material in this example was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 2.1.

**Example 22**

The nano-silicon-based composite anode material was prepared in substantially the same manner as in Example 5, except that the fluorine content in the aggregate is 39 ppm, and then a heat treatment was performed.
The anode material prepared by this example includes an aggregate, and a carbon layer coated on the surface of the aggregate, where the aggregate includes silicon powder, a carbon material, and fluorine element, and a mass ratio of the silicon powder and the carbon material is 62.5:37.5. The anode material has a median particle diameter of 12.8 $\mu$m and a specific surface area of 5.9 m$^2$/g. The carbon layer has an average thickness of 549 nm. The aggregate has a fluorine element content of 39 ppm. The carbon material in this example was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 2.31.

**Example 23**

The nano-silicon-based composite anode material was prepared in substantially the same manner as in Example 1, except that the dopant used was triphenyl phosphine, and the content of the dopant element was the same as in Example 1. The carbon material in this example was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 2.1.

**Example 24**

The nano-silicon-based composite anode material was prepared in substantially the same manner as in Example 1, except that the dopant used was tetraphenyl phosphonium bromide, and the content of the dopant element was the same as in Example 1. The $I_D/I_G$ of this example is 2.05.

**Example 25**

The nano-silicon-based composite anode material was prepared in substantially the same manner as in Example 1, except that the dopant used was lithium nitride, and the content of the dopant element was the same as in Example 1. The carbon material in this example was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 1.9.

**Example 26**

The nano-silicon-based composite anode material was prepared in substantially the same manner as in Example 1, except that the dopant used was thiourea, and the content of the dopant element was the same as in Example 1. The carbon material in this example was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 1.85.

**Comparative Example 1**

The nano-silicon-based composite anode material was prepared in substantially the same manner as in Example 1, except that the mixing was directly performed without the fluoride, and then a heat treatment was performed.
The anode material prepared by this example includes an aggregate, and a carbon layer coated on the surface of the aggregate, where the aggregate includes silicon powder and a carbon material, and a mass ratio of the silicon powder and the carbon material is 63.3:36.7. The anode material has a median particle diameter of 13.5 $\mu$m and a specific surface area of 6.3 m$^2$/g. The carbon layer has an average thickness of 561 nm. The aggregate has a fluorine element content of 0 ppm. The carbon materials in this comparative example was shown in a Raman spectrum obtained by Raman spectroscopy using a measurement light source having a wavelength of 532 nm that a G band was observed at 1530 cm$^{-1}$ to 1630 cm$^{-1}$, and a D band was observed at 1280 cm$^{-1}$ to 1380 cm$^{-1}$, and a ratio $I_D/I_G$ of between peak intensity $I_D$ of the D band and peak intensity $I_G$ of the G band is 2.5.

**Performance Test**

Electrochemical cycling performance was tested as following: dissolving the anode material prepared in Examples 1 to 26 and Comparative Example 1, a conductive agent, and a binders in a mass percent of 94:1:5 in a solvent for mixing, controlling solid content to be 50%, then applying to a copper foil current collector, vacuum drying, to prepare an anode pole piece; and then assembling a 18650 cylindrical single cell by conventional production process by further using a ternary cathode pole piece prepared by a conventional production process, 1mol/L of electrolyte including LiPF$_6$/ethyl cellulose + dimethyl carbonate + methyl ethyl carbonate (v/v=1:1:1), Celgard 2400 separator, and shell. The charge and discharge testing of the cylindrical battery was performed by a LAND cell test system produced by Wuhan Jinnuo Electronics Co., Ltd, under room temperature conditions, charging and discharging at 0.2C constant current, and the charge and discharge voltage was controlled to 2.75 V to 4.2 V, thus obtaining the initial reversible capacity, the initial charging capacity and the initial discharge capacity. The initial Coulombic efficiency = the initial discharge capacity / the initial charge capacity.
The cycling was repeated for 50 times. The lithium ion battery was measured the thickness H1 of the pole piece at this time using a micrometer, the expansion ratio after 50 cycles = (H1-H0)/H0×100%.

The cycling was repeated for 100 times. The discharge capacity was recorded as the remaining capacity of lithium ion battery; the capacity retention rate = the remaining capacity / the initial capacity * 100%.

Test density of anode material: A empty bottle was weighed as mass m, which was filled with distilled water, and weighed at this time as mass m1; then the bottle was washed, dried, added a certain amount of anode material, and recorded the total mass at this time as m2, then added distilled water for full filled, the mass was weighed as m3. The volume of the bottle V1 = (m1-m)/$\rho_{water}$, the volume of the anode material v2 = V1-(m3-m2)/$\rho_{water}$, test density of the anode material $\rho$1 = (m2-m)/v2, where $\rho_{water}$ was the density of distilled water.
The results of the performance test are as follows:

Table 1 Table of performance comparison results

|  | F Content (ppm) | Initial Reversible Capacity (mAh/g) | Initial Coulombic Efficiency (%) | Capacity Retention Rate at 100 Cycles (%) | Expansion Ratio after 50 Cycles (%) | Porosity of the Aggregate (%) | Pore Volume of the Carbon Material (cm$^3$/g) |
|---|---|---|---|---|---|---|---|
| Example 1 | 600 | 1762 | 87.6 | 91.0 | 41.7 | 10.6 | 0.35 |
| Example 2 | 920 | 1582 | 87.8 | 95.6 | 35.1 | 5.5 | 0.69 |

(continued)

| | F Content (ppm) | Initial Reversible Capacity (mAh/g) | Initial Coulombic Efficiency (%) | Capacity Retention Rate at 100 Cycles (%) | Expansion Ratio after 50 Cycles (%) | Porosity of the Aggregate (%) | Pore Volume of the Carbon Material $(cm^3/g)$ |
|---|---|---|---|---|---|---|---|
| Example 3 | 1030 | 1741 | 87.1 | 92.1 | 39.1 | 8.8 | 0.58 |
| Example 4 | 590 | 1555 | 87.1 | 93.3 | 35.9 | 6.9 | 0.65 |
| Example 5 | 15060 | 1471 | 89.5 | 93.5 | 32.5 | 2.0 | 0.72 |
| Example 6 | 9620 | 1311 | 89.2 | 93.9 | 33.6 | 3.1 | 0.61 |
| Example 7 | 600 | 1710 | 87.9 | 92.9 | 40.2 | 4.4 | 0.41 |
| Example 8 | 8040 | 1701 | 88.0 | 92.8 | 39.9 | 4.3 | 0.58 |
| Example 9 | 602 | 1699 | 87.5 | 92.1 | 40.3 | 11.5 | 0.57 |
| Example 10 | 605 | 1692 | 88.1 | 93.5 | 37.3 | 3.6 | 0.63 |
| Example 11 | 601 | 1704 | 86.4 | 92.1 | 39.0 | 10.2 | 0.52 |
| Example 12 | 608 | 1689 | 87.0 | 93.8 | 36.4 | 5.0 | 0.56 |
| Example 13 | 600 | 1700 | 87.8 | 92.5 | 40.0 | 10.7 | 0.39 |
| Example 14 | 610 | 1679 | 87.8 | 93.9 | 36.1 | 4.5 | 0.68 |
| Example 15 | 590 | 1688 | 88.0 | 93.1 | 38.5 | 12.9 | 0.64 |
| Example 16 | 598 | 1698 | 88.3 | 94.0 | 35.6 | 10.9 | 0.67 |
| Example 17 | 2190 | 1691 | 87.2 | 91.9 | 40.6 | 7.9 | 0.46 |
| Example 18 | 890 | 1767 | 85.2 | 85.0 | 48.8 | 14.1 | 0.37 |
| Example 19 | 20000 | 1401 | 84.5 | 89.5 | 37.5 | 6.9 | 0.648 |
| Example 20 | 21890 | 1259 | 86.1 | 87.7 | 53.1 | 15.5 | 0.450 |
| Example 21 | 50 | 1421 | 86.5 | 90.5 | 38.5 | 3.9 | 0.57 |
| Example 22 | 39 | 1651 | 85.5 | 85.5 | 56.5 | 11.5 | 0.36 |
| Example 23 | 778 | 1712 | 87.0 | 91.1 | 41.4 | 8.8 | 0.45 |
| Example 24 | 899 | 1682 | 87.1 | 91.6 | 41.1 | 7.5 | 0.48 |
| Example 25 | 1211 | 1702 | 87.9 | 92.1 | 40.7 | 7.2 | 0.41 |
| Example 26 | 1098 | 1711 | 87.6 | 92.0 | 40.4 | 5.9 | 0.43 |
| Comparative Example 1 | 0 | 1759 | 85.1 | 85.7 | 55.1 | 19.6 | 0.29 |

As shown in Table 1, the anode materials prepared in Examples 1 to 26, by incorporating a dopant element into the aggregate, can achieve a carbon material with higher degree of graphitization, thereby increasing the conductivity of the anode material, and thereby providing space for silicon expansion, and reducing the volume expansion effect of silicon,.

Example 19 added a fluorine-containing component has a fluorine content higher than 20000 ppm, the initial efficiency, the expansion rate, and the cycle life are not as good as the present application, thus the performances are degraded.

Example 22 added a fluorine-containing component has a fluorine content less than 50 ppm, and its graphitization of carbon material is poor, such that the initial efficiency, expansion rate, cycle life of the pole piece made with the prepared anode active material are not as good as the present application, thus the performances are degraded.

The anode material in Comparative Example 1 is prepared without fluoride. The initial columbic efficiency and the cycle capacity retention rate of the anode material is decreased.

The applicant declares that the present application uses the above-mentioned examples to illustrate the detailed process equipment and process flow of the present application, but the present application is not limited to the above-mentioned detailed process devices and process flow, that is, the implementation of the present application does not necessarily rely on the above-mentioned detailed process devices and process flow. It should be apparent to those skilled in the art that any modifications to the present application, additions of equivalent alterations and ancillary components to various materials of the present application, selection of a specific manner, and the like, are within the scope and disclosure of the present application.

**Claims**

1.  An anode material, **characterized in that** the anode material comprises an aggregate, the aggregate comprises an active material, a carbon material, and a dopant element, wherein the dopant element is capable of inducing the carbon material to produce a Lewis acid site, and at least a portion of the active material is bound to the carbon material through the Lewis acid site, and wherein the anode material has a specific surface area of $\leq 10$ m$^2$/g.

2.  The anode material according to claim 1, **characterized in that** the anode material comprises at least one of the following features (1) to (8):

    (1) the dopant element comprises at least one of fluorine, nitrogen, and phosphorous;
    (2) at least one of the active material and the carbon material contains the dopant element;
    (3) the dopant element is distributed on at least one of surface and inside of the active material;
    (4) the dopant element is distributed on at least one of surface and inside of the carbon material;
    (5) a content of the dopant element in the aggregate is 50 ppm to 20000 ppm;
    (6) pores are formed among the carbon materials, and at least a portion of the active material is filled in the pores;
    (7) the carbon material has a pore volume of $\geq 0.35$ cm$^3$/g; and
    (8) the active material is distributed among the carbon materials or on surface of the carbon material.

3.  The anode material according to claim 1 or 2, **characterized in that** the anode material comprises at least one of the following features (1) to (5):

    (1) the active material comprises an active particle;
    (2) the active material comprises at least one of Li, Na, K, Sn, Ge, Si, Fe, Mg, Ti, Zn, Al, P, Cu, and SiO$_x$, wherein $0<x\leq2$;
    (3) the active material has a median particle diameter of 1 nm to 300 nm;
    (4) the carbon material comprises at least one of crystalline carbon, noncrystalline carbon, artificial graphite, natural graphite, soft carbon, hard carbon, amorphous carbon, carbon nanotubes, carbon fiber, and graphene; and
    (5) a mass ratio of the active material to the carbon material is (90 to 10):(10 to 90).

4.  The anode material according to claim 2, **characterized in that** the aggregate further comprises a metal oxide, and the metal oxide comprises at least one of the following features (1) to (7):

    (1) at least a portion of the metal oxide is filled in the pores among the carbon materials;
    (2) the metal oxide has a chemical formula of M$_x$O$_y$, $0.2\leq y/x\leq3$, wherein M comprises at least one of Sn, Ge, Si, Fe, Cu, Ti, Na, Mg, Al, Ca, and Zn;
    (3) the metal oxide comprises any of GeO$_2$, SnO$_2$, ZnO, TiO$_2$, Fe$_3$O$_4$, MgO, SiO$_2$, and CuO;
    (4) a mass ratio of the active material to the metal oxide is (30 to 100):(0.5 to 10);
    (5) the metal oxide is in a form of at least one of sheet and strip shape;
    (6) the metal oxide has an aspect ratio greater than 2; and
    (7) a shortest distance among the metal oxides is $\geq 100$ nm.

5.  The anode material according to claim 2, **characterized in that** the aggregate further comprises a conductive enhancer, and the conductive enhancer comprises at least one of the following features (1) to (7):

    (1) at least a portion of the conductive enhancer is filled in the pores among the carbon materials;
    (2) the conductive enhancer comprises at least one of an alloy material and a conductive carbon;
    (3) the conductive enhancer comprises at least one of an alloy material and a conductive carbon, wherein the conductive carbon comprises at least one of carbon nanotube, carbon fiber, and graphite fiber;
    (4) the conductive enhancer has a conductivity of 10$^0$ S/m to 10$^8$ S/m;

(5) the conductive enhancer is in a form of at least one of sheet and strip shape;
(6) a mass ratio of the conductive enhancer to the active material is (0.01 to 15):(50 to 100); and
(7) the conductive enhancer has an aspect ratio of 2 to 5000.

6. The anode material according to any one of claims 1 to 5, **characterized in that** the anode material further comprises a carbon layer coated on at least a portion of the surface of the aggregate, the carbon layer comprises at least one of the following features (1) to (3):

(1) a material of the carbon layer comprises amorphous carbon;
(2) the carbon layer has a thickness of 10 nm to 5000 nm; and
(3) a mass ratio of the aggregate to the carbon layer is (90 to 10):(10 to 90).

7. The anode material according to any one of claims 1 to 5, **characterized in that** the anode material further comprises an oxide layer formed on at least a portion of the surface of the active material, the oxide layer comprises at least one of the following features (1) to (2):

(1) the oxide layer has a thickness of 1 nm to 100 nm; and
(2) the oxide layer has pores.

8. The anode material according to any one of claims 1 to 7, **characterized in that** the anode material has a median particle diameter of 0.5 $\mu$m to 30 $\mu$m.

9. A lithium ion battery, **characterized in that** the lithium ion battery comprises an anode material according to any one of claims 1 to 8.

mixing an active material, a dopant, a first carbon source and a solvent to prepare a precursor — S100

undergoing the precursor a primary heat treatment at 800°C to 980°C to obtain an aggregate — S200

undergoing the aggregate a carbon coating process to obtain the anode material — S300

FIG. 1